(19) Europäisches Patentamt
European Patent Office
Office européen des brevets

(11) EP 0 345 522 B1

(12) EUROPÄISCHE PATENTSCHRIFT

(45) Veröffentlichungstag und Bekanntmachung des Hinweises auf die Patenterteilung:
**26.08.1998 Patentblatt 1998/35**

(51) Int Cl.[6]: **C08L 69/00**, C08K 5/51
// (C08L69/00, 51:04, 27:18)

(21) Anmeldenummer: **89109211.6**

(22) Anmeldetag: **23.05.1989**

# (54) Flammwidrige, schlagzähe Polycarbonat-Formmassen

Flame-retardant, impact-resistant polycarbonate moulding compositions

Masses à mouler de polycarbonate ignifuges et résistant au choc

(84) Benannte Vertragsstaaten:
**DE ES FR GB IT NL**

(30) Priorität: **04.06.1988 DE 3819081**

(43) Veröffentlichungstag der Anmeldung:
**13.12.1989 Patentblatt 1989/50**

(73) Patentinhaber: **BAYER AG**
**51368 Leverkusen (DE)**

(72) Erfinder:
- **Wittmann, Dieter, Dr.**
  **D-5000 Köln 80 (DE)**
- **Peters, Horst, Dr.**
  **D-5090 Leverkusen 3 (DE)**
- **Schoeps, Jochen, Dr.**
  **D-4150 Krefeld (DE)**
- **Kress, Hans-Jürgen, Dr. c/o Mobay Corporation**
  **Pittsburgh, PA 15205 (US)**
- **Buekers, Josef**
  **D-4150 Krefeld (DE)**
- **Ott, Karl-Heinz, Dr.**
  **D-5090 Leverkusen (DE)**

(56) Entgegenhaltungen:
**EP-A- 0 023 291**
**EP-A- 0 174 493**
**EP-A- 0 206 058**
**EP-A- 0 207 359**
**EP-A- 0 226 922**
**EP-A- 0 244 856**
**EP-A- 0 248 308**
**EP-A- 0 320 836**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der vorliegenden Erfindung sind schlagzähe, flammwidrige, thermoplastische Polycarbonat-Formmassen, bestehend aus

A) 60 bis 96 Gew.-Teilen, bevorzugt 70 bis 95,5 Gew.-Teilen, eines oder mehrerer thermoplastischer, halogenfreier, aromatischer Polycarbonate aus Diphenole der Formel (II)

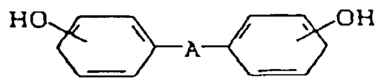

(II)

worin A eine Einfachbindung, $C_1$-$C_5$-Alkylen, $C_2$-$C_5$-Alkyliden, $C_5$-$C_6$-Cycloalkyliden, -S- oder -$SO_2$- ist,

B) 4 bis 15 Gew.- Teilen, bevorzugt 4,5 bis 10 Gew.-Teilen, eines oder mehrerer halogenfreier Pfropfpolymerisate aus

B.1 5 bis 90 Gew.-Teile, vorzugsweise 30 bis 80 Gew.-Teile, bezogen auf B., einer Mischung aus

B.1.1) 50 bis 95 Gew.-% Styrol, α-Methylstyrol, kernsubstituiertem Styrol, Methylmethacrylat oder Mischungen daraus und

B.1.2) 50 bis 5 Gew.-% (Meth-)Acrylnitril, Methylmethacrylat, n-Butylacrylat, t-Butyl-(meth)acrylat oder Mischungen daraus, auf

B.2) 95 bis 10 Gew.-Teilen, vorzugsweise 70 bis 20 Gew.-Teilen, bezogen auf B), eines Dien-Kautschuks, eines Kautschuks aus Ethylen, Propylen und einem unkonjugierten Dien oder eines Silikonkautschuks mit einer Glastemperatur $T_G \leq 10°C$, und

C) 0 bis 40 Gew.-Teilen, vorzugsweise 1 bis 30 Gew.-Teilen, besonders bevorzugt 5 bis 20 Gew.-Teilen, eines halogenfreien, thermoplastischen Copolymerisats aus

C.1) 50 bis 95 Gew.-% Styrol, α-Methylstyrol, kernsubstituiertem Styrol, Methylmethacrylat oder Mischung daraus, und

C.2) 50 bis 5 Gew.-% (Meth)Acrylnitril, Methylmethacrylat oder Mischungen daraus
wobei die Summe der Gew.-Teile aus A) + B) + gegebenenfalls C) jeweils 100 Gew.-Teile ergibt, und

D) 1 bis 20 Gew.-Teilen, vorzugsweise 2 bis 15 Gew.-Teilen, besonders bevorzugt 3 bis 12 Gew.-Teilen, bezogen auf 100 Gew.-Teile aus A) + B) + gegebenenfalls C), einer halogenfreien Phosphorverbindung der Formel (I)

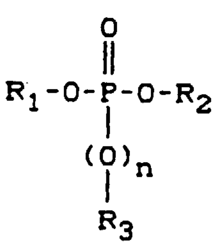

(I)

worin $R_1$, $R_2$ und $R_3$ unabhängig voneinander $C_1$-$C_8$-Alkyl oder gegebenenfalls alkyl-substituiertes $C_6$-$C_{20}$-Aryl sind und "n" für 0 oder 1 steht, und

E) 0,05 bis 5 Gew.-Teile, vorzugsweise 0,1 bis 1 Gew.-Teil, besonders bevorzugt 0,1 bis 0,5 Gew.-Teile, bezogen auf 100 Gew.-Teile aus A) + B) + gegebenenfalls C), eines Tetrafluorethylenpolymerisates mit mittleren Teilchengrößen von 0,05 bis 1.000 µm, einer Dichte von 1,2 bis 2,3 $g/cm^3$ und einem Fluorgehalt von 65 bis 76 Gew.-%,

wobei die Komponente E) vorzugsweise in Form einer koagulierten Mischung von Emulsionen der Tetrafluorethylenpolymerisate E) einer mittleren Teilchengröße von 0,05 bis 20 µ und einer Dichte von 1,2 bis 1,9 g/cm$^3$ mit Emulsionen von Pfropfpolymerisaten B) eingesetzt wird, und wobei das Gewichtsverhältnis Pfropfpolymerisat B) zum Tetrafluorethylenpolymerisat E) zwischen 95 : 5 und 60 : 40 liegt und der Gehalt an zusätzlichen Mengen B), bezogen auf 100 Gew.-Teile A) + B) und gegebenenfalls C), zwischen 0,1 und 4,0 Gew.-Teilen liegt, sowie gegebenenfalls wirksame Mengen an üblichen Stabilisatoren, Pigmenten, Fließhilfsmittel, Füll- und Verstärkungsstoffen, Entformungsmitteln und/oder Antistatika.

Aus der DE-OS 3 322 260 (Le A 22 391) sind flammwidrige thermoplastische Formmassen aus

(a) 5 bis 95 Gew.-Teilen Polycarbonat,

(b) 5 bis 95 Gew.-Teilen SAN-Pfropfpolymerisat,

(c) 0 bis 50 Gew.-Teilen eines thermoplastischen Polymerisats,

(d) gegebenenfalls 3 bis 15 Gew.-Teilen
pro 100 Gew.-Teile (a) + (b) + (c), einer organischen Halogenverbindung,

(e) 0,05 bis 5 Gew.-Teilen
pro 100 Gew.-Teile (a) + (b) + (c), Antimontrioxid, Antimoncarbonat, Wismuttrioxid oder Wismutcarbonat,

(f) 0,05 bis 0,5 Gew.-Teilen
bezogen auf 100 Gew.-Teile der Summe von (a) bis (f) feinteiliges Tetrafluorethylenpolymerisat bekannt.

Hierbei werden bei Einsatz von Antimontrioxid oder Antimoncarbonat, sowie bei spezieller Einarbeitung des Tetrafluorethylenpolymerisats via Cofällung mit den Komponenten (b) und gegebenenfalls (c) flammwidrige Formkörper mit guter Oberfläche erhalten, die bei Anwesenheit von zusätzlichem Halogen, sei es über die Komponente (a) oder durch Anwesenheit der Komponenten (d) V - O bei 1,6 mm erreichen (siehe entsprechende EP-PS 0 131 751).

Gemäß DE-OS 3 430 234 (Le A 22 925) sind flammwidrige thermoplastische Polymermischungen bekannt, die spezielle, halogenfreie Polycarbonate aus 50 Mol-% bis 100 Mol-% tetraalkylierten Bisphenol-carbonat-Struktureinheiten, halogenfreie Styrolpolymere und/oder halogenfreie Pfropfpolymere, halogenfreie Phosphatester und gegebenenfalls Tetrafluorethylenpolymerisate enthalten.

Gemäß EP-OS 0 174 493 (Le A 23 043-EP) sind thermoplastische Formmassen, bestehend aus

A) 20 bis 85 Gew.-Teilen eines thermoplastischen aromatischen Polycarbonats,
B) 5 bis 50 Gew.-Teilen eines Pfropfpolymerisats aus

B.1) 5 bis 90 Gew.-Teilen, vorzugsweise 30 bis 80 Gew.-Teilen einer Mischung aus

B.1.1) 50 bis 95 Gew.-% Styrol, α-Methylstyrol, kernsubstituiertem Styrol, Methylmethacrylat oder Mischungen daraus, und

B.1.2) 50 bis 5 Gew.-% (Meth)Acrylnitril, Methylmethacrylat, Maleinsäureanhydrid, N-substituiertem Maleinimid oder Mischungen daraus, auf

B.2) 95 bis 10 Gew.-Teile, vorzugsweise 70 bis 20 Gew.-Teile, eines Kautschuks mit einer Glastemperatur $T_G$ ≤ 10°C,

C) 5 bis 70 Gew.-Teilen eines thermoplastischen Copolymerisats aus

C.1) 50 bis 95 Gew.-% Styrol, α-Methylstyrol, kernsubstituiertem Styrol, Methylmethacrylat oder Mischungen daraus, und

C.2) 50 bis 5 Gew.-% (Meth)Acrylnitril, Methylmethacrylat, Maleinsäureanhydrid, N-substituiertem Maleinimid oder Mischungen daraus, und gegebenenfalls

D) 3 bis 15 Gew.-Teilen einer niedermolekularen oder hochmolekularen Halogenverbindung, insbesondere einer

Bromverbindung, bezogen auf jeweils 100 Gew.-Teile aus A) + B) + C) und gegebenenfalls D), wobei jeweils der Halogengehalt, resultierend aus den Komponenten A) + D), zwischen 3 Gew.-% und 10 Gew.-%, bezogen auf das Gesamtgewicht der Komponenten A) + D), betragen soll, die dadurch gekennzeichnet sind, daß sie zusätzlich E) 1 bis 15 Gew.-Teile, vorzugsweise 2 bis 12 Gew.-Teile einer Phosphorverbindung der Formel (I) enthalten

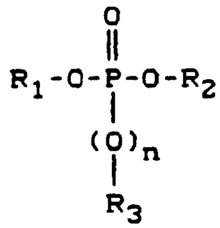

(I)

worin $R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl und "n" 0 oder 1 sind, und
F) 0,05 bis 1 Gew.-Teile, insbesondere 0,1 bis 0,5 Gew.-Teile eines Tetrafluorethylenpolymerisats mit mittleren Teilchengrößen von 0,05 bis 20 µm und einer Dichte von 1,2 bis 1,9 $g/cm^3$ enthalten,

wobei sich die Gew.-Teile der Komponenten E) und F) jeweils auf 100 Gew.-Teile der Summe der Komponenten A) + B) + C) und gegebenenfalls D) beziehen, und

wobei die Komponente F) in Form einer koagulierten Mischung von Emulsionen der Tetrafluorethylenpolymerisate F) mit Emulsionen von zusätzlichen Mengen an Pfropfpolymerisaten B) von maximal 4 Gew.-Teilen, mindestens jedoch 0,1 Gew.-Teil, bezogen auf 100 Gew.-Teile der Summe der Komponenten A) + B) + C) und gegebenenfalls D), eingesetzt wird.

Hierbei zeigt sich, daß nur in Anwesenheit der Komponente D) und/oder bei Einsatz von halogeniertem Polycarbonat als Komponente A) nach UL-94 die V-O-Werte bei 1,6 mm liegen.

Es hat sich nun gezeigt, daß gegenüber der Lehre dieser EP-OS 0 174 493 mit den erfindungsgemäßen Formmassen auch in Abwesenheit von Halogen-(Cl-, Br-)Verbindungen V - O erreicht wird; man hatte erwartet, daß durch die Anwesenheit von zusätzlichen Pfropfpolymerisaten neben der via Tefloncofällung anwesenden Menge von 0,1 bis 4 Gew.-Teilen kein V - 0 bei 1,6 mm Dicke erreichbar wäre.

Aus der DE-OS 3 521 388 (Le A 23 877) sind thermoplastische Formmassen mit flammwidrigen Eigenschaften bekannt, die halogenfreie Polycarbonate, Copolymerisate aus Styrolen mit Maleinsäureanhydrid, Phosph(on)atester, Tetrafluorethylenpolymerisate und 0,1 bis 3 Gew.-Teile Pfropfpolymerisate enthalten, wobei die Pfropfpolymerisate wiederum mit den Tetrafluorethylenpolymerisaten cogefällt worden sind. Diese Formmassen haben zwar V - O bei 1,6 mm, die Zähigkeit, Fließnahtfestigkeit und Spannungsrißbeständigkeit sind für zahlreiche Anwendungen jedoch noch nicht ausreichend.

Aus der DE-OS 3 523 314 (Le A 23 940) sind schlagzähe, flammwidrige Formmassen bekannt, die aus halogenfreien Polycarbonaten, halogenfreien Styrol-Acrylnitril-Copolymerisaten, Phosphorverbindungen, Tetrafluorethylenpolymerisaten und 0,1 bis 3 Gew.-Teile Pfropfpolymerisaten enthalten, wobei die Pfropfpolymerisate wiederum mit den Tetrafluorethylenpolymerisaten cogefällt worden sind.

Die Zähigkeit, Fließnahtfestigkeit und Spannungsrißbeständigkeit der Formmassen gemäß DE-OS 3 523 314 ist für einige Anwendungen jedoch noch nicht ausreichend, insbesondere bei komplizierten, flammgeschützten Formkörpern wie Gehäuseteilen, wo konstruktiv bedingte Durchbrüche, Stege u. ä, ein möglichst hohes Niveau der obengenannten Eigenschaften erfordern.

Aus der DE-OS 3 545 609 (Le A 24 039) sind halogenfreie, schwer brennbare Formmassen bekannt, bestehend aus

A) 40 bis 95 Gew.-Teilen, bezogen auf 100 Gew.-Teile A) + B) + C), eines thermoplastischen, halogenfreien, aromatischen Polycarbonats,

B) 5 bis 30 Gew.-Teilen, bezogen auf 100 Gew.-Teile A) + B) + C), eines halogenfreien "ABS"-Pfropfpolymerisats, erhältlich aus 20 bis 90 Gew.-% eines Gemisches aus

a) 95 bis 50 Gew.-% Styrol, p-Methylstyrol, α-Methylstyrol oder Mischungen daraus, und

b) 5 bis 50 Gew.-% Acrylnitril und/oder Methacrylnitril auf 80 bis 10 Gew.-% eines Dienkautschuks,

C) 10 bis 30 Gew.-Teilen, bezogen auf 100 Gew.-Teile A) + B) + C), eines halogenfreien, statistisch aufgebauten Copolymerisats aus

C.1) 5 bis 30 Gew.-% Maleinsäureanhydrid und

C.2) 95 bis 70 Gew.-% Styrol, α-Methylstyrol, kernalkylierten Styrolen oder Mischungen dieser genannten Styrole,

D) 1 bis 20 Gew.-Teilen, bezogen auf 100 Gew.-Teile Gesamtgewicht aus A) + B) + C), einer halogenfreien Phosphorverbindung der Formel (I)

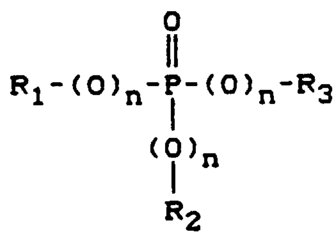

(I)

worin $R_1$, $R_2$ und $R_3$ unabhängig voneinander ein $C_1$-$C_8$-Alkyl oder ein gegebenenfalls alkylsubstituiertes $C_6$-$C_{20}$-Aryl sind und "n" für Null oder 1 steht, wobei auch zwei der Indices "n" 1 und der dritte Null sein kann,

E) 0,05 bis 5 Gew.-Teile, bezogen auf 100 Gew.-Teile Gesamtgewicht aus A) + B) + C), eines Tetrafluorethylenpolymerisats, und gegebenenfalls

F) Stabilisatoren, Pigmenten, Fließmitteln, Entformungsmitteln und/oder Antistatika.

Derartige Formmassen haben jedoch den Nachteil einer geringeren Verarbeitungsbreite und Fließnahtfestigkeit, verglichen mit den erfindungsgemäßen Formmassen.

Aus der DE-OS 3 628 904 (Le A 24 683) sind schlagzähe, flammwidrige Polycarbonatformmassen bekannt, bestehend aus

A) 60 bis 90 Gew.-Teilen eines halogenfreien Polydiorganosiloxan-Polycarbonat-Blockcopolymeren mit mittlerem Molekulargewicht $\overline{M}_w$ von 10.000 bis 200.000 und mit einem Gehalt an aromatischen Carbonatstruktureinheiten zwischen 75 und 99 Gew.-% und einem Gehalt an Diorganosiloxan-Einheiten zwischen 25 und 1,0 Gew.-%, wobei die Blockcopolymeren, ausgehend von α,ω-Bishydroxyaryloxyendgruppen-haltigen Polydiorganosiloxanen, mit einem Polymerisationsgrad $P_n$ von 5 bis 100 hergestellt werden,

B) 10 bis 40 Gew.-Teilen eines halogenfreien, thermoplastischen Copolymerisats aus 50 bis 95 Gew.-% Styrol, α-Methylstyrol, kernsubstituiertem Styrol oder Mischungen daraus, und 5 bis 50 Gew.-% (Meth)-Acrylnitril,

C) 1 bis 20 Gew.-Teilen, bezogen auf 100 Gew.-Teile Gesamtgewicht aus A) und B), einer halogenfreien Phosphorverbindung der Formel (I)

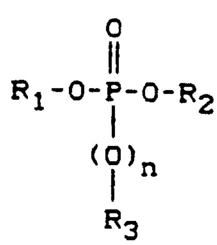

(I)

worin $R_1$, $R_2$ und $R_3$ unabhängig voneinander $C_1$-$C_8$-Alkyl oder gegebenenfalls alkylsubstituiertes $C_6$-$C_{20}$-Aryl sind und "n" für Null oder 1 steht und

D) 0,05 bis 5 Gew.-Teilen, bezogen wiederum auf 100 Gew.-Teile Gesamtgewicht aus A) und B) eines Tetrafluorethylenpolymerisats mit einer Dichte von 2,0 bis 2,3 g/cm$^3$ und einer Teilchengröße von 100 bis 1.000 µm.

Aus der DE-OS 3 629 546 (Le A 24 695) sind schlagzähe, flammwidrige Formmassen bekannt, enthaltend

A) 60 bis 90 Gew.-Teile eines halogenfreien Polydiorganosiloxan-Polycarbonat-Blockcopolymere mit mittlerem Molekulargewicht $\overline{M}_w$ von 10.000 bis 20.000 und mit einem Gehalt an aromatischen Carbonatstruktureinheiten zwischen 75 und 99 Gew.-% und einem Gehalt an Diorganosiloxan-Einheiten zwischen 25 und 1,0 Gew.-%, wobei die Blockcopolymeren, ausgehend von $\alpha,\omega$-Bishydroxyaryloxyendgruppen-haltigen Polydiorganosiloxanen, mit einem Polymerisationsgrad $P_n$ von 5 bis 100, hergestellt werden,

B) 10 bis 40 Gew.-Teile eines halogenfreien, thermoplastischen Copolymerisats aus 50 bis 95 Gew.-% Styrol, $\alpha$-Methylstyrol, kernsubstituiertem Styrol oder Mischungen daraus und 5 bis 50 Gew.-% (Meth)-Acrylnitril,

C) 1 bis 20 Gew.-Teile, bezogen auf 100 Gew.-Teile Gesamtgewicht aus A) und B), einer halogenfreien Phosphorverbindung der Formel (I)

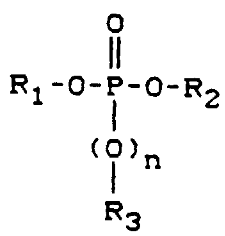

(I)

worin $R_1$, $R_2$ und $R_3$ unabhängig voneinander $C_1$-$C_8$-Alkyl oder gegebenenfalls alkylsubstituiertes $C_6$-$C_{20}$-Aryl sind und "n" für 0 oder 1 steht und

D) 0,05 bis 5 Gew.-Teile, bezogen auf 100 Gew.-Teile Gesamtgewicht aus A) und B), eines Tetrafluorethylenpolymerisats mit mittleren Teilchengrößen von 0,05 bis 20 µm und einer Dichte von 1,2 bis 1,9 g/cm$^3$, wobei die Komponente D) in Form einer koagulierten Mischung von Emulsionen der Tetrafluorethylenpolymerisate D) mit Emulsionen von max. 3
Gew.-Teilen, mindestens jedoch 0,1 Gew.-Teil, bezogen auf 100 Gew.-Teile der Summe der Komponenten A) und B), von Pfropfpolymerisaten

E) aus 5 bis 90 Gew.-Teilen einer Mischung aus

E.1.1) 50 bis 95 Gew.-% Styrol, $\alpha$-Methylstyrol, kernsubstituiertem Styrol, Methylmethacrylat oder Mischungen daraus, und

E.1.2) 50 bis 5 Gew.-% (Meth)-Acrylnitril, Methylmethacrylat, Maleinsäureanhydrid, N-substituiertem Maleinimid oder Mischungen daraus, auf

E.2) 95 bis 10 Gew.-Teile eines Kautschuks mit einer Glastemperatur $T_G \leq 10°C$
eingesetzt wird, und wobei das Gewichtsverhältnis Pfropfpolymerisat E) zum Tetrafluorethylenpolymerisat D) zwischen 95 : 5 und 60 : 40 liegt.

Die Formmassen gemäß DE-OS 3 628 904 und DE-OS 3 629 546 besitzen jedoch eine unzureichende Spannungsrißbeständigkeit.

Der technische Vorteil der erfindungsgemäßen Formmassen liegt in der äußerst vorteilhaften Kombination von Zähigkeit, Spannungsrißbeständigkeit und Flammwidrigkeit begründet, wobei letztere ohne Halogen-(Br-, Cl-) und Metallverbindungen erreicht wird.

Erfindungsgemäß geeignete, thermoplastische, halogenfreie, aromatische Polycarbonate gemäß Komponente A) sind solche auf Basis der Diphenole der Formel II,

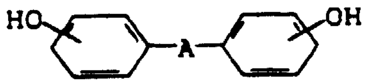 (II)

worin A eine Einfachbindung, $C_1$-$C_5$-Alkylen, $C_2$-$C_5$-Alkyliden, $C_5$-$C_6$-Cycloalkyliden, -S- oder -$SO_2$- ist.

Geeignete Diphenole der Formel (II) sind beispielsweise Hydrochinon, Resorcin, 4,4'-Dihydroxydiphenyl, 2,2-Bis (4-hydroxyphenyl)-propan, 2,4-Bis-(4-hydroxyphenyl)-2-methylbutan oder 1,1-Bis-(4-hydroxyphenyl)-cyclohexan.

Bevorzugte Diphenole der Formel (II) sind 2,2-Bis-(4-hydroxyphenyl)-propan und 1,1-Bis-(4-hydroxyphenyl)-cyclohexan.

Die Diphenole der Formel (II) sind entweder literaturbekannt oder nach literaturbekanntem Verfahren herstellbar.

Die Herstellung der erfindungsgemäß geeigneten Polycarbonate gemäß Komponente A) ist literaturbekannt und kann beispielsweise mit Phosgen nach dem Phasengrenzflächenverfahren oder mit Phosgen nach den Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. Geeignete Kettenabbrecher sind beispielsweise Monophenole wie Phenol selbst, p-Kresol, p-tert.-Butylphenol und p-Isooctylphenol.

Die erfindungsgemäß geeigneten Polycarbonate gemäß Komponente A) haben mittlere Gewichtsmolekulargewichte ($\overline{M}_w$, gemessen beispielsweise durch Ultrazentrifugation oder durch Streulichtmessung) von 10.000 bis 200.000, vorzugsweise von 20.000 bis 80.000.

Die erfindungsgemäß geeigneten Polycarbonate gemäß Komponente A) sind sowohl Homopolycarbonate als auch Copolycarbonate.

Die erfindungsgemäß geeigneten Polycarbonate gemäß Komponente A) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen, mit drei oder mehr als drei phenolischen OH-Gruppen.

"Halogenfreie Polycarbonate" im Sinne der vorliegenden Erfindung bedeutet, daß die Polycarbonate aus halogenfreien Diphenolen, halogenfreien Kettenabbrechern und gegebenenfalls halogenfreien Verzweigern aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne der vorliegenden Erfindung.

Zur Herstellung der halogenfreien Pfropfpolymerisate B) geeignete Kautschuke sind insbesondere Polybutadien, Butadien/Styrol-Copolymerisate (beide auch copolymerisiert mit bis zu 30 Gew.-%, bezogen auf Kautschukgewicht, eines niederen Alkylesters von Acryl- oder Methacrylsäure wie Methylmethacrylat, Ethylacrylat, Methylacrylat oder Ethylmethacrylat), Polyisopren, EPDM-Kautschuke, also Kautschuke aus Ethylen, Propylen und einem unkonjugierten Dien, sowie Silikonkautschuke.

Bevorzugte Kautschuke zur Herstellung der Pfropfpolymerisate B) sind Dien- und Alkylacrylatkautschuke.

Die Kautschuke liegen in den Pfropfpolymerisaten B) in Form wenigstens partiell vernetzter Teilchen einer mittleren Teilchengröße von 0,09 bis 5 µm, insbesondere 0,1 bis 1 µm vor. Die Pfropfpolymerisate B) werden durch radikalische Pfropfcopolymerisation der eingangs definierten Monomerengemische aus B.1.1) und B.1.2) in Gegenwart der zu pfropfenden Kautschuke B.2) hergestellt und sind durchweg bekannt. Bevorzugte Herstellungsverfahren für die Pfropfpolymerisate B) sind Emulsions-, Lösungs-, Masse- oder Suspensionspolymerisation. Besonders bevorzugte Pfropfpolymerisate B) sind die sogenannten ABS-Polymerisate. Als kernsubstituierte Styrole sind kernalkylierte Styrole, wie z. B. p-Methylstyrol, zu verstehen.

Copolymerisate gemäß Komponente C) entstehen häufig bei der Pfropfpolymerisation zur Herstellung der Komponente B) als Nebenprodukte, besonders dann, wenn große Mengen Monomere auf kleine Mengen Kautschuk gepfropft werden.

Die erfindungsgemäß einzusetzende Menge an Copolymerisat C) bezieht diese Nebenprodukte der Pfropfpolymerisation nicht mit ein.

Die Copolymerisate gemäß Komponente C) sind harzartig, thermoplastisch und kautschukfrei. Besonders bevorzugte Copolymerisate C) sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.

Besonders bevorzugte Gewichtsverhältnisse im thermoplastischen Copolymerisat C) sind 60 bis 80 Gew.-% C.1) und 40 bis 20 Gew.-% C.2).

Die Styrol-Acrylnitril-Copolymerisate gemäß Komponente C) sind bekannt und lassen sich durch radikalische Polymerisation, insbesondere durch Emulsions-, Suspensions-, Lösungs- oder Massepolymerisation herstellen. Die Copolymerisate gemäß Komponente C) besitzen vorzugsweise Molekulargewichte $\overline{M}_w$ (Gewichtsmittel, ermittelt durch

Lichtstreuung oder Sedimentation) zwischen 15.000 und 200,000.

Die erfindungsgemäß geeigneten halogenfreien Phosphorverbindungen gemäß Komponente D) sind generell bekannt (s. beispielsweise Ullmann, Enzyklopädie der technischen Chemie, Bd. 18, S. 301 ff, 1979; Houben-Weyl, Methoden der Organischen Chemie, Bd. 12/1, S. 43; Beilstein, Bd. 6, S. 177).

Erfindungsgemäß geeignete Phosphorverbindungen gemäß Komponente D), Formel (I), sind beispielsweise Triphenylphosphat, Trikresylphosphat, Diphenyl-2-ethylkresylphosphat, Tri-(iso-propylphenyl)-phosphat, Methylphosphonsäurediphenylester, Phenylphosphonsäurediethylester, Diphenylkresylphosphat und Tributylphosphat.

Die erfindungsgemäß geeigneten Tetrafluorethylenpolymerisate gemäß Komponente E) sind Polymere mit Fluorgehalten von 65 bis 76 Gew.-%, vorzugsweise 70 bis 76 Gew.-%. Beispiele sind Polytetrafluorethylen, Tetrafluorethylen-Hexafluorpropylen-Copolymere oder Tetrafluorethylencopolymerisate mit geringen Mengen fluorfreier, copolymerisierbarer, ethylenisch ungesättigter Monomere. Die Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat bei Drucken von 7 bis 71 kg/cm$^2$ und bei Temperaturen von 0 bis 200°C, vorzugsweise bei Temperaturen von 20 bis 100°C. (Nähere Einzelheiten s. beispielsweise US-Patent 2 393 967.) Je nach Einsatzform kann die Dichte dieser Materialien zwischen 1,2 und 2,3 g/cm$^3$, die mittlere Teilchengröße zwischen 0,05 und 1.000 μm liegen.

Erfindungsgemäß bevorzugte Polytetrafluorethylene haben mittlere Teilchengrößen von 0,05 bis 20 μm, vorzugsweise 0,08 bis 10 μm, und eine Dichte von 1,2 bis 1,9 g/cm$^3$ und werden in Form einer koagulierten Mischung von Emulsionen der Tetrafluorethylenpolymerisate E) mit Emulsionen der Pfropfpolymerisate B) eingesetzt.

Geeignete, in Pulverform einsetzbare Tetrafluorethylenpolymerisate E) haben beispielsweise Teilchengrößen von 100 bis 1.000 μm und Dichten von 2,0 g/cm$^3$ bis 2,3 g/cm$^3$.

Durch den Zusatz von Tetrafluorethylenpolymerisaten wird insbesondere das Abtropfen der Formmassenschmelze während des Brandvorganges reduziert oder ganz verhindert; durch den Einsatz in Form einer koagulierten Mischung wird darüber hinaus noch die Oberfläche von aus den erfindungsgemäßen Mischungen hergestellten Formkörpern verbessert, was besonders für die Herstellung sehr großflächiger Teile bzw. für die Herstellung bei sehr hohen Verarbeitungstemperaturen wichtig ist.

Zur Herstellung einer koagulierten Mischung aus B) und E) wird zuerst eine wäßrige Emulsion (Latex) eines Pfropfpolymerisates B) mit mittleren Latexteilchengrößen von 0,1 bis 2 μm, insbesondere 0,2 bis 0,6 μm, mit einer feinteiligen Emulsion eines Tetrafluorethylenpolymerisates E) in Wasser mit mittleren Teilchengrößen von 0,05 bis 20 μm, insbesondere von 0,08 bis 10 μm, vermischt; geeignete Tetrafluorethylenpolymerisat-Emulsionen besitzen üblicherweise Feststoffgehalte von 30 bis 70 Gew.-%, insbesondere von 50 bis 60 Gew.-%. Die Emulsionen der Pfropfpolymerisate B) besitzen Feststoffgehalte von 25 bis 50 Gew.-%, vorzugsweise von 30 bis 45 Gew.-%.

In der Emulsionsmischung liegt das Gewichtsverhältnis Pfropfpolymerisat B) zum Tetrafluorethylenpolymerisat E) zwischen 95 : 5 und 60 : 40. Anschließend wird die Emulsionsmischung in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen, thermoplastischen Formmassen können weitere für Polycarbonate, Pfropfpolymerisate oder für die thermoplastischen Polymerisate bekannte Zusätze wie Stabilisatoren, Pigmente, Fließmittel, Entformungsmittel, Füll- und Verstärkungsstoffe und/oder Antistatika enthalten.

Die gefüllten bzw. verstärkten Formmassen können bis zu 60, vorzugsweise 5 bis 50 Gew.-%, bezogen auf die gefüllte bzw. verstärkte Formmasse, Füll- und/oder Verstärkungsstoffe enthalten. Als Verstärkungsstoffe geeignet sind Glasfasern, Kohlefasern, Aramidfasern etc.. Bevorzugte Verstärkungsstoffe sind Glasfasern. Bevorzugte Füllstoffe, die auch verstärkend wirken können, sind Glaskugeln, Glimmer, Silikate, Quarz, Talkum, Titandioxid, Wollastonit.

Die erfindungsgemäßen Formmassen, bestehend aus den Komponenten A), B), D) und E) sowie gegebenenfalls C) und/ oder gegebenenfalls weiteren bekannten Zusätzen wie Stabilisatoren, Pigmenten, Fließmitteln, Entformungsmitteln, Füll- und Verstärkungsstoffen und/oder Antistatika werden hergestellt, indem man die jeweiligen Bestandteile in bekannter Weise vermischt und danach bei Temperaturen von 200 bis 330°C in üblichen Aggregaten wie Innenknetern oder Ein- oder Zweischneckenextrudern schmelzcompoundiert oder schmelzextrudiert oder indem man Lösungen der jeweiligen Komponenten in geeigneten organischen Lösemitteln, beispielsweise in Chlorbenzol, mischt und die Lösungsgemische in gebräuchlichen Eindampfaggregaten, beispielsweise in Eindampfextrudern, eindampft.

Gegenstand der vorliegenden Erfindung ist somit auch ein Verfahren zur Herstellung von thermoplastischen Formmassen, bestehend aus den Komponenten A), B), D) und E) und gegebenenfalls der Komponente C), Stabilisatoren, Pigmenten, Fließmitteln, Füll- und Verstärkungsstoffen, Entformungsmitteln und/oder Antistatika, das dadurch gekennzeichnet ist, daß man die Komponenten A), B), D) und E) und gegebenenfalls die Komponente C), Stabilisatoren,

Pigmente, Fließmittel, Füll- und Verstärkungsstoffe, Entformungsmittel und/oder Antistatika nach erfolgter Vermischung bei Temperaturen von 200 bis 330°C in gebräuchlichen Aggregaten schmelzcompoundiert oder schmelzextrudiert, wobei die Komponente E) vorzugsweise in Form einer koagulierten Mischung mit der Komponente B) eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art, z. B. für Haushaltsgeräte wie Saftpressen, Kaffeemaschinen, Mixer, für Büromaschinen oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlerer Teilchendurchmesser $d_{50}$, ermittelt durch Ultrazentrifugenmessungen nach W. Scholtan et. al., Colloids, u. Z. Polymere 250 (1972) S. 782 - 796.

Beispiele

1. Eingesetzte Komponenten

A) Polycarbonat aus 2,2-Bis-(4-hydroxyphenyl)-propan (Bisphenol A) mit einer relativen Lösungsviskosität $\eta^{rel}$ = 1,31, gemessen in Methylenchlorid bei 23°C und einer Konzentration von 0,5 Gew.-%.

B) SAN-Pfropfpolymerisat von 50 Gew.-% Styrol-Acrylnitril-Gemisch (im Gew.-Verhältnis von 72 : 28) auf 50 Gew.-% teilchenförmiges Polybutadien einer mittleren Teilchengröße ($d_{50}$) von 0,4 µm, erhalten durch Emulsionspolymerisation.

C) Styrol/Acrylnitril-Copolymerisat mit einem Styrol-Acrylnitril-Verhältnis von 72 : 28 und einer Grenzviskosität von [η] = 0,55 dl/g (Messung in Dimethylformamid bei 20°C).

D) Triphenylphosphat

E) Tetrafluorethylenpolymerisat als koagulierte Mischung aus einer SAN -Pfropfpolymerisat-Emulsion gemaB B) in Wasser und einer Tetrafluorethylenpolymerisat-Emulsion in Wasser. Das Gewichtsverhältnis Pfropfpolymerisat B) zum Tetrafluorethylenpolymerisat E) in der Mischung ist 90 Gew.-% zu 10 Gew.-%. Die Tetrafluorethylenpolymerisat-Emulsion besitzt einen Feststoffgehalt von 60 Gew.-%; die Teilchengröße liegt zwischen 0,05 und 0,5 µm. Die SAN-Pfropfpolymerisat-Emulsion besitzt einen Feststoffgehalt von 34 Gew.-% und eine mittlere Latexteilchengröße von 0,4 µm.

Herstellung von E:

Die Emulsion des Tetrafluorethylenpolymerisats wurde mit der Emulsion des SAN-Pfropfpolymerisats B) vermischt und mit 1,8 Gew.-%, bezogen auf Polymerfeststoff, phenolischer Antioxidantien stabilisiert. Bei 85 bis 95°C wurde die Mischung mit einer wäßrigen Lösung von $MgSO_4$ (Bit-tersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

2. Herstellung und Prüfung der erfindungsgemäßen Formmassen

Die Compoundierung der Komponenten A), B), C), D) und E) erfolgte auf einem Doppelwellenextruder (Werner und Pfleiderer) vom Typ ZSK 53 bei einer Temperatur von 240°C.

Die Herstellung von Formkörpern erfolgte auf einer Spritzgußmaschine bei 260°C.

Das Brandverhalten der Proben wurde nach UL-Subj. 94 V in Prüfkörperdicken von 1,6 mm gemessen. Der UL-94-Test wird wie folgt durchgeführt:

Substanzproben werden zu Stäben der Abmessungen 127 x 12,7 x 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x $10^4$ $kJ/m^3$ (1.000 BUT per cubic foot) benutzt.

Die UL-94 V-O-Klassifizierung umfaßt die nachstehend beschriebenen Eigenschaften von Materialien, die gemäß der UL-94-Vorschrift geprüft wurden. Die Polycarbonatformmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie erhalten auch keine Proben, die länger als 30 s nach Entfernen der Testflamme glimmen.

Andere UL-94-Klassifizierungen bezeichnen Proben, die weniger flammwidrig und selbstverlöschend sind und die flammende Tropfen oder Teilchen abgeben. Diese Klassifizierung werden mit UL-94 V-1 und V-2 bezeichnet. N. b. heißt "nicht bestanden" und ist die Klassifizierung von Proben, die eine Nachbrennzeit von>30 s aufweisen.

Die Bestimmung der Kerbschlagzähigkeit erfolgte in Ablehnung an DIN 53 453/ISO R 179 an Stäben der Abmessung 50 x 6 x 4 mm, wobei die Stäbe mit einer V-förmigen Kerbe der Kerbtiefe 2,7 mm versehen wurden.

Als Kriterium für das Spannungsrißverhalten wurde die Abnahme der Schlagzähigkeit (bestimmt an Stäben der Abmessung 50 x 6 x 4 mm gemäß DIN 53 453/ISO R 179) nach Lagern in einem Kraftstoffsimulanz-Bad (Mischung aus 50 Gew.-% Toluol und 50 Gew.-% Isooctan) bei Raumtemperatur herangezogen, wobei die Probekörper auf einer Kreisbogenschablone vorgedehnt wurden. Bei spannungsrißempfindlichen Materialien sind hierbei umso ungünstigere Werte (d. h. umso höhere Eigenschaftseinbußen) zu erwarten, je länger die Probekörper im Testbad gelagert werden und je höher die Vordehnung $\varepsilon_x$ (in %) ist. Der Ausgangswert für nicht vorgedehnte und nicht dem Testbad ausgesetzte Probekörper ist für beide Beispiele jeweils n. g. ("nicht gebrochen"). Für das erfindungsgemäße Beispiel 1 (gemäß Tabelle 1) findet man nach 7 Tagen Lagerung im Testbad bei $\varepsilon_x$ = 1 % eine Abnahme der Schlagzähigkeit von n. g. auf 90 $kJ/m^2$, nach 30 Tagen Lagerung bei $\varepsilon_x$ = 1 % eine Abnahme auf 85 $kJ/m^2$. Das Vergleichsbeispiel 2 (gemäß Tabelle 2) zeigt hingegen nach 7 Tagen Lagerung im Testbad bei $\varepsilon_x$ = 0,6 % bereits eine Abnahme der Schlagzähigkeit von n. g. auf 15 $kJ/m^2$, nach 30 Tagen Lagerung unter gleichen Bedingungen eine Abnahme auf 10 $kJ/m^2$. Trotz höherer Vordehnung $\varepsilon_x$ nimmt die Schlagzähigkeit des erfindungsgemäßen Beispiels weit weniger ab als beim Vergleichsbeispiel beobachtet. Wie die nachstehende Tabelle 1 zeigt, weisen die erfindungsgemäßen Formmassen bei gleicher Flammwidrigkeit zudem ein deutlich höheres Niveau der Kerbschlagzähigkeit auf.

Tabelle 1

| Zusammensetzung und Eigenschaften der Formmassen | | | | | | | |
|---|---|---|---|---|---|---|---|
| Beispiel | Komponenten (Gew.-Teile) | | | | | Kerbschlagzähigkeit [$kJ/m^2$] | UL 94 V [1,6 mm] |
| | A | B | C | D | E | | |
| 1 (erfindungsgemäßes Beispiel | 65 | 5 | 15 | 12 | 3 | 10,7 | VO |
| 2 (Vergleichsbeispiel) | 65 | - | 20 | 12 | 3 | 3,9 | VO |

**Patentansprüche**

**Patentansprüche für folgende Vertragsstaaten : DE, FR, GB, NL, IT**

**1.** Thermoplastische Formmassen, bestehend aus

A) 60 bis 96 Gew.-Teilen eines oder mehrerer thermoplastischer, halogenfreier, aromatischer Polycarbonate aus Diphenolen der Formel (II)

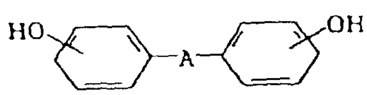

(II)

worin A eine Einfachbindung, $C_1$-$C_5$-Alkylen, $C_2$-$C_5$-Alkyliden, $C_5$-$C_6$-Cycloalkyliden, -S- oder -$SO_2$- ist,

B) 4 bis 15 Gew.-Teilen eines oder mehrerer halogenfreier Pfropfpolymerisate aus

B.1) 5 bis 90 Gew.-Teilen, bezogen auf B), einer Mischung aus

B.1.1) 50 bis 95 Gew.-% Styrol, α-Methylstyrol, kernsubstituiertem Styrol, Methylmethacrylat oder Mischungen daraus und

B.1.2) 50 bis 5 Gew.-% (Meth-)Acrylnitril, Methylmethacrylat, n-Butylacrylat, t-Butyl(meth)acrylat oder Mischungen daraus, auf

B.2) 95 bis 10 Gew.-Teilen, bezogen auf B), eines Dien-Kautschuks, eines Kautschuks aus Ethylen, Propylen und, einem unkonjugierten Dien oder eines Silikonkautschuks mit einer Glastemperatur $T_G \leq 10°C$, und

C) 0 bis 40 Gew.-Teilen eines halogenfreien, thermoplastischen Copolymerisats aus

C.1) 50 bis 95 Gew.-% Styrol, α-Methylstyrol, kernsubstituiertem Styrol, Methylmethacrylat oder Mischungen daraus,

C.2) 50 bis 5 Gew.-% (Meth)Acrylnitril, Methylmethacrylat oder Mischungen daraus,
wobei die Summe der Gew.-Teile aus A) + B) + gegebenenfalls C) jeweils 100 Gew.-Teile ergibt, und

D) 1 bis 20 Gew.-Teilen, bezogen auf 100 Gew.-Teile aus A) + B) + gegebenenfalls C), einer halogenfreien Phosphorverbindung der Formel (I)

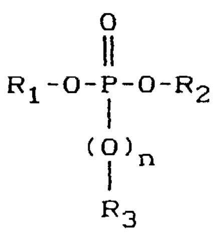

(I)

worin $R_1$, $R_2$ und $R_3$ unabhängig voneinander $C_1$-$C_8$-Alkyl oder gegebenenfalls alkylsubstituiertes $C_6$-$C_{20}$-Aryl sind und "n" für 0 oder 1 steht und

E) 0,05 bis 5 Gew.-Teilen, bezogen auf 100 Gew.-Teile aus A) + B) + gegebenenfalls C), eines Tetrafluorethylenpolymerisates mit mittleren Teilchengrößen von 0,05 bis 1.000 µm, einer Dichte von 1,2 bis 2,3 g/cm³ und einem Fluorgehalt von 65 bis 76 Gew.-%.

**2.** Formmassen gemäß Anspruch 1, dadurch gekennzeichnet, daß die Komponente C) in Mengen von 1 bis 30 Gew.-Teilen vorliegt.

**3.** Formmassen gemäß Ansprüchen 1 und 2, dadurch gekennzeichnet, daß die Komponente D) in Mengen von 2 bis 15 Gew.-Teilen vorliegt.

**4.** Formmassen gemäß Ansprüchen 1 bis 3, dadurch gekennzeichnet, daß die Komponente E) in Mengen von 0,1 bis 1 Gew.-Teilen vorliegt.

**5.** Formmassen gemäß Anspruch 1, dadurch gekennzeichnet, daß als Komponente B.2) ein Dien-Kautschuk eingesetzt wird.

**6.** Formmassen gemäß Anspruch 5, dadurch gekennzeichnet, daß als Komponente B.2) Polybutadien oder Butadien/Styrol-Copolymerisate verwendet werden.

**7.** Formmassen gemäß Anspruch 1, dadurch gekennzeichnet, daß die Komponente E) in Form einer koagulierten

Mischung von Emulsionen der Tetrafluorethylenpolymerisate E) einer mittleren Teilchengröße von 0,05 bis 20 um und einer Dichte von 1,2 bis 1,9 g/cm$^3$ mit Emulsionen von Pfropfpolymerisaten B), eingesetzt wird, das Gewichtsverhaltnis Pfropfpolymerisat B) zum Tetrafluorethylenpolymerisat E) zwischen 95 : 5 und 60 : 40 liegt und der Gehalt an zusätzlichen Mengen B), bezogen auf 100 Gew.-Teile A) + B) + gegebenenfalls C), zwischen 0,1 und 4,0 Gew.-Teilen liegt.

**8.** Formmassen gemäß Anspruch 1, dadurch gekennzeichnet, daß sie wirksame Mengen an mindestens einem Zusatz, ausgewählt aus der Gruppe der Stabilisatoren, Pigmente, Fließhilfsmittel, Füll- und Verstärkungsstoffe, Entformungsmittel und/oder Antistatika enthalten.

**9.** Formmassen gemäß Anspruch 8, dadurch gekennzeichnet, daß sie als Verstärkungsstoffe bis zu 60 Gew.-%, bezogen auf die zu verstärkende Formmasse, Glasfasern enthalten.

**10.** Verfahren zur Herstellung der Formmassen gemäß Anspruch 1, wobei man die Komponenten A), B), D), E) und gegebenenfalls C) und gegebenenfalls Zusatzstoffe gemäß Anspruch 8 in bekannter Weise vermischt und danach bei Temperaturen von 200 bis 330°C in gebräuchlichen Aggregaten schmelzcompoundiert oder schmelzextrudiert.

**Patentansprüche für folgenden Vertragsstaat : ES**

**1.** Verfahren zur Herstellung von thermoplastischen Formmassen, bestehend aus

A) 60 bis 96 Gew.-Teilen eines oder mehrerer thermoplastischer, halogenfreier, aromatischer Polycarbonate aus Diphenolen der Formel (II)

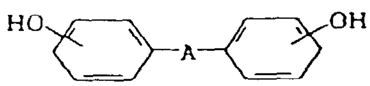

(II)

worin A eine Einfachbindung, $C_1$-$C_5$-Alkylen, $C_2$-$C_5$-Alkyliden, $C_5$-$C_6$-Cycloalkyliden, -S- oder -$SO_2$- ist,

B) 4 bis 15 Gew.-Teilen eines oder mehrerer halogenfreier Pfropfpolymerisate aus

B.1) 5 bis 90 Gew.-Teilen, bezogen auf B), einer Mischung aus

B.1.1) 50 bis 95 Gew.-% Styrol, α-Methylstyrol, kernsubstituiertem Styrol, Methylmethacrylat oder Mischungen daraus und

B.1.2) 50 bis 5 Gew.-% (Meth-)Acrylnitril, Methylmethacrylat, n-Butylacrylat, t-Butyl(meth)acrylat oder Mischungen daraus, auf

B.2) 95 bis 10 Gew.-Teilen, bezogen auf B), eines Dien-Kautschuks, eines Kautschuks aus Ethylen, Propylen und einem unkonjugierten Dien oder eines Silikonkautschuks mit einer Glastemperatur $T_G \leq 10°C$, und

C) 0 bis 40 Gew.-Teilen eines halogenfreien, thermoplastischen Copolymerisats aus

C.1) 50 bis 95 Gew.-% Styrol, α-Methylstyrol, kernsubstituiertem Styrol, Methylmethacrylat oder Mischungen daraus,

C.2) 50 bis 5 Gew.-% (Meth)Acrylnitril, Methylmethacrylat oder Mischungen daraus,
wobei die Summe der Gew.-Teile aus A) + B) + gegebenenfalls C) jeweils 100 Gew.-Teile ergibt, und

D) 1 bis 20 Gew.-Teilen, bezogen auf 100 Gew.-Teile aus A) + B) + gegebenenfalls C), einer halogenfreien Phosphorverbindung der Formel (I)

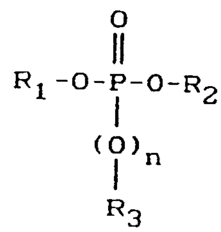 (I)

worin $R_1$, $R_2$ und $R_3$ unabhängig voneinander $C_1$-$C_8$-Alkyl oder gegebenenfalls alkylsubstituiertes $C_6$-$C_{20}$-Aryl sind und "n" für 0 oder 1 steht und

E) 0,05 bis 5 Gew.-Teilen, bezogen auf 100 Gew.-Teile aus A) + B) + gegebenenfalls C), eines Tetrafluorethylenpolymerisates mit mittleren Teilchengrößen von 0,05 bis 1.000 µm, einer Dichte von 1,2 bis 2,3 g/cm$^3$ und einem Fluorgehalt von 65 bis 76 Gew.-%,

wobei man die Komponente A), B), D), E) und gegebenenfalls C) vermischt und danach bei Temperaturen von 200 bis 330°C schmelzcompoundiert oder schmelzextrudiert.

2. Verfahren gemäß Anspruch 1, wobei die Komponente C) in Mengen von 1 bis 30 Gew.-Teilen vorliegt.

3. Verfahren gemäß Anspruch 1, wobei die Komponente D) in Mengen von 2 bis 15 Gew.-Teilen vorliegt.

4. Verfahren gemäß Anspruch 1, wobei die Komponente E) in Mengen von 0,1 bis 1 Gew.-Teilen vorliegt.

5. Verfahren gemäß Anspruch 1, wobei die Komponente B.2) ein Dien-Kautschuk ist.

6. Verfahren gemäß Anspruch 5, wobei als Kautschuk gemäß Komponente B.2) Polybutadien oder Butadien/ Styrol-Copolymerisate verwendet werden.

7. Verfahren gemäß Anspruch 1, wobei die Komponente E) in Form einer koagulierten Mischung von Emulsionen der Tetrafluorethylenpolymerisate E) einer mittleren Teilchengröße von 0,05 bis 20 µm und einer Dichte von 1,2 bis 1,9 g/cm$^3$ mit Emulsionen von Pfropfpolymerisaten B), eingesetzt wird, das Gewichtsverhältnis Pfropfpolymerisat B) zum Tetrafluorethylenpolymerisat E) zwischen 95 : 5 und 60 : 40 liegt und der Gehalt an zusätzlichen Mengen B), bezogen auf 100 Gew.-Teile A) + B) + gegebenenfalls C), zwischen 0,1 und 4,0 Gew.-Teilen liegt.

8. Verfahren gemäß Anspruch 1, wobei wirksame Mengen an mindestens einem Zusatz, ausgewählt aus der Gruppe der Stabilisatoren, Pigmente, Fließhilfsmittel, Füll- und Verstärkungsstoffe, Entformungsmittel und/oder Antistatika zugesetzt werden.

9. Verfahren gemäß Anspruch 8, wobei als Verstärkungsstoffe bis zu 60 Gew.-%, bezogen auf die zu verstärkende Formmasse, Glasfasern zugesetzt werden.

## Claims

### Claims for the following Contracting States : DE, FR, GB, NL, IT

1. Thermoplastic moulding compositions, comprising

A) 60 to 96 parts by wt. of one or more thermoplastic, halogen-free, aromatic polycarbonates of diphenols corresponding to the formula (II)

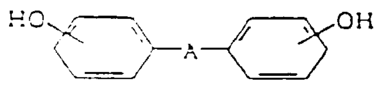

(II)

wherein A is a single bond, $C_1$-$C_5$-alkylene, $C_2$-$C_5$-alkylidene, $C_5$-$C_6$-cycloalkylidene, -S- or -$SO_2$-,

B) 4 to 15 parts by wt. of one or more halogen-free graft polymers of

B.1) 5 to 90 parts by wt., based on B), of a mixture of

B.1.1) 50 to 95 wt.% of styrene, α-methylstyrene, styrene substituted on the nucleus, methylmethacrylate or mixtures thereof, and

B.1.2) 50 to 5 wt.% of (meth)acrylonitrile, methylmethacrylate, n-butylacrylate, t-butyl(meth)acrylate or mixtures thereof, on

B.2) 95 to 10 parts by wt., based on B), of a diene rubber, a rubber of ethylene, propylene and an unconjugated diene, or of a silicone rubber with a glass transition temperature $T_G$ of $\leq 10°C$, and

C) 0 to 40 parts by wt. of a halogen-free, thermoplastic copolymer of

C.1) 50 to 95 wt.% of styrene, α-methylstyrene, styrene substituted on the nucleus, methylmethacrylate or mixtures thereof,

C.2) 50 to 5 wt.% of (meth)acrylonitrile, methylmethacrylate or mixtures thereof,
wherein the sum of the parts by wt. of A) + B) + optionally C) is 100 parts by wt. in each case, and

D) 1 to 20 parts by wt., based on 100 parts by wt. of A) + B) + optionally C), of a halogen-free phosphous compound corresponding to the formula (I)

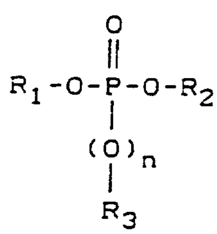

(I)

wherein $R_1$, $R_2$ and $R_3$, independently of one another, are $C_1$-$C_8$-alkyl or optionally alkylsubstituted $C_6$-$C_{20}$-aryl and "n" stands for 0 or 1, and

E) 0.05 to 5 parts by wt., based on 100 parts by wt. of A) + B) + optionally C), of a tetrafluoroethylene polymer with average particle sizes of 0.05 to 1,000 μm, a density of 1.2 to 2.3 $g/cm^3$ and a fluorine content of 65 to 76 wt.%.

**2.** Moulding compositions according to claim 1,
characterised in that component C) is present in quantities of 1 to 30 parts by wt.

**3.** Moulding compositions according to claims 1 and 2,
characterised in that component D) is present in quantities of 2 to 15 parts by wt.

**4.** Moulding compositions according to claims 1 to 3,
characterised in that component E) is present in quantities of 0.1 to 1 part by wt.

**5.** Moulding compositions according to claim 1,

characterised in that a diene rubber is used as component B.2).

**6.** Moulding compositions according to claim 5,
characterised in that polybutadiene or butadiene/styrene copolymers are used as component B.2).

**7.** Moulding compositions according to claim 1,
characterised in that component E) is used in the form of a coagulated mixture of emulsions of tetrafluoroethylene polymer E) with an average particle size of 0.05 to 20 μm and a density of 1.2 to 1.9 g/cm$^3$ with emulsions of graft polymers B), the weight ratio of graft polymer B) to the tetrafluoroethylene polymer E) is between 95 : 5 and 60 : 40, and the content of additional quantities of B), based on 100 parts by wt. of A) + B) + optionally C), is between 0.1 and 4.0 parts by wt.

**8.** Moulding compositions according to claim 1,
characterised in that they contain effective quantities of at least one additive, selected from the group comprising stabilisers, pigments, flow promoters, fillers and reinforcing agents, mould release agents and/or antistatic agents.

**9.** Moulding compositions according to claim 8,
characterised in that they contain up to 60 wt.%, based on the moulding composition to be reinforced, of glass fibres as reinforcing agents.

**10.** A process for the preparation of the moulding compositions according to claim 1, wherein the components A), B), D), E) and optionally C) and optionally additives according to claim 8 are mixed in a known way and then melt compounded or melt extruded at temperatures of 200 to 330°C in customary equipment.

**Claims for the following Contracting State : ES**

**1.** A process for the preparation of thermoplastic moulding compositions, comprising

A) 60 to 96 parts by wt. of one or more thermoplastic, halogen-free, aromatic polycarbonates of diphenols corresponding to the formula (II)

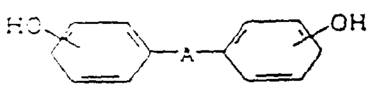

(II)

wherein A is a single bond, $C_1$-$C_5$-alkylene, $C_2$-$C_5$-alkylidene, $C_5$-$C_6$-cycloalkylidene, -S- or -$SO_2$-,

B) 4 to 15 parts by wt. of one or more halogen-free graft polymers of

B.1) 5 to 90 parts by wt., based on B), of a mixture of

B.1.1) 50 to 95 wt.% of styrene, α-methylstyrene, styrene substituted on the nucleus, methylmethacrylate or mixtures thereof, and

B.1.2) 50 to 5 wt.% of (meth)acrylonitrile, methylmethacrylate, n-butylacrylate, t-butyl(meth)acrylate or mixtures thereof, on

B.2) 95 to 10 parts by wt., based on B), of a diene rubber, a rubber of ethylene, propylene and an unconjugated diene, or of a silicone rubber with a glass transition temperature $T_G$ of ≤ 10°C, and

C) 0 to 40 parts by wt. of a halogen-free, thermoplastic copolymer of

C.1) 50 to 95 wt.% of styrene, α-methylstyrene, styrene substituted on the nucleus, methylmethacrylate or mixtures thereof,

C.2) 50 to 5 wt.% of (meth)acrylonitrile, methylmethacrylate or mixtures thereof,
wherein the sum of the parts by wt. of A) + B) + optionally C) is 100 parts by wt. in each case, and

D) 1 to 20 parts by wt., based on 100 parts by wt. of A) + B) + optionally C), of a halogen-free phosphorus compound corresponding to the formula (I)

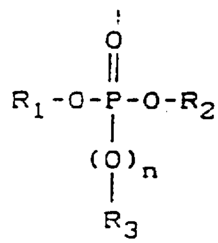

(I)

wherein $R_1$, $R_2$ and $R_3$, independently of one another, are $C_1$-$C_8$-alkyl or optionally alkylsubstituted $C_6$-$C_{20}$-aryl and "n" stands for 0 or 1, and

E) 0.05 to 5 parts by wt., based on 100 parts by wt. of A) + B) + optionally C), of a tetrafluoroethylene polymer with average particle sizes of 0.05 to 1,000 µm, a density of 1.2 to 2.3 g/cm$^3$ and a fluorine content of 65 to 76 wt.%.
wherein the components A), B), D), E) and optionally C) are mixed and then melt compounded or melt extruded at temperatures of 200 to 330°C.

2. A process according to claim 1, wherein component C) is present in quantities of 1 to 30 parts by wt.

3. A process according to claim 1, wherein component D) is present in quantities of 2 to 15 parts by wt.

4. A process according to claim 1, wherein component E) is present in quantities of 0.1 to 1 part by wt.

5. A process according to claim 1, wherein component B.2) is a diene rubber.

6. A process according to claim 5, wherein polybutadiene or butadiene/styrene copolymers are used as rubber according to component B.2).

7. A process according to claim 1, wherein component E) is used in the form of a coagulated mixture of emulsions of tetrafluoroethylene polymer E) with an average particle size of 0.05 to 20 µm and a density of 1.2 to 1.9 g/cm$^3$ with emulsions of graft polymers B), the weight ratio of graft polymer B) to the tetrafluoroethylene polymer E) is between 95 : 5 and 60 : 40, and the content of additional quantities of B), based on 100 parts by wt. of A) + B) + optionally C), is between 0.1 and 4.0 parts by wt.

8. A process according to claim 1, wherein effective quantities cf at least one additive, selected from the group comprising stabilisers, pigments, flow promoters, fillers and reinforcing agents, mould release agents and/or antistatic agents are added.

9. A process according to claim 8, wherein up to 60 wt.%, based on the moulding composition to be reinforced, of glass fibres are added as reinforcing agents.

## Revendications

### Revendications pour les Etats contractants suivants : DE, FR, GB, NL, IT

1. Matières à mouler thermoplastiques consistant en

A) 60 à 96 parties en poids d'un ou plusieurs polycarbonates aromatiques thermoplastiques, exempts d'halogènes de diphénols de formule II

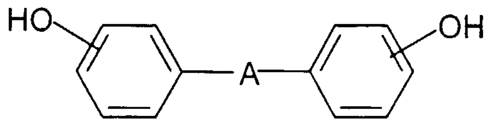

(II)

dans laquelle A représente une liaison simple, un groupe alkylène en $C_1$-$C_5$, alkylidène en $C_2$-$C_5$, cycloalkylidène en $C_5$-$C_6$, -S- ou $-SO_2-$,

B) 4 à 15 parties en poids d'un ou plusieurs polymères greffés, exempts d'halogènes, de

B.1) 5 à 90 parties en poids, par rapport à B), d'un mélange de

B.1.1) 50 à 95 % en poids de styrène, d'α-méthylstyrène, d'un styrène substitué dans le noyau, de méthacrylate de méthyle ou leurs mélanges, et
B.1.2) 50 à 5 % en poids de (méth)acrylonitrile, de méthacrylate de méthyle, d'acrylate de n-butyle, de (méth)acrylate de tert-butyle ou leurs mélanges, sur

B.2) 95 à 10 parties en poids, par rapport à B), d'un caoutchouc diénique, d'un caoutchouc d'éthylène, de propylène et d'un diène non conjugué ou d'un caoutchouc de silicone ayant une température de transition du second ordre $T_G \leq 10°$ C, et :

C) 0 à 40 parties en poids d'un copolymère thermoplastique, exempt d'halogènes de

C.1) 50 à 95 % en poids de styrène, d'α-méthylstyrène, d'un styrène substitué dans le noyau, de méthacrylate de méthyle ou leurs mélanges,
C.2) 50 à 5 % en poids de (méth)acrylonitrile, de méthacrylate de méthyle leurs mélanges,

la somme des parties en poids de A) + B) + le cas échéant C) étant dans tous les cas de 100 parties en poids, et

D) 1 à 20 parties en poids, pour 100 parties en poids de A) + B) + le cas échéant C), d'un dérivé du phosphore, exempt d'halogènes de formule I

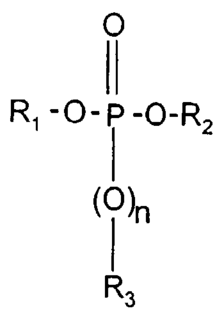

(I)

dans laquelle $R_1$, $R_2$ et $R_3$ représentent chacun, indépendamment les uns des autres,
un groupe alkyle en $C_1$-$C_8$ ou un groupe aryle en $C_6$-$C_{20}$ portant éventuellement un substituant alkyle, et n est égal à 0 ou 1, et

E) 0,05 à 5 parties en poids, pour 100 parties en poids de A)+ B) + le cas échéant C), d'un polymère du tétrafluoréthylène à une dimension de particule moyenne de 0,05 à 1 000 µm, une densité de 1,2 à 2,3 $g/cm^3$ et une teneur en fluor de 65 à 76 % en poids.

2. Matières à mouler selon la revendication 1, caractérisées en ce que le composant est présent en quantités de 1 à 30 parties en poids.

3. Matières à mouler selon les revendications 1 et 2, caractérisées en ce que le composant D) est présent en quantités de 2 à 15 parties en poids.

**4.** Matières à mouler selon les revendications 1 à 3, caractérisées en ce que le composant E) est présent en quantités de 0,1 à 1 partie en poids.

**5.** Matières à mouler selon la revendication 1, caractérisées en ce que le composant B.2) consiste en un caoutchouc diénique.

**6.** Matières à mouler selon revendication 5, caractérisées en ce que le composant B.2) consiste en un polybutadiène ou en un copolymère butadiène/styrène.

**7.** Matières à mouler selon revendication 1, caractérisées en ce que le composant E est mis en oeuvre à l'état de mélange coagulé d'une émulsion du polymère du tétrafluoréthylène E), à une dimension de particule moyenne de 0,05 à 20 µm et une densité de 1,2 à 1,9 g/cm$^3$ avec une émulsion du polymère greffé B), à des proportions relatives en poids polymère greffé B/polymère du tétrafluoréthylène E) allant de 95 : 5 à 60 : 40, avec une teneur en compléments de B), pour 100 parties en poids de A) + B) + le cas échéant C), qui va de 0,1 à 4,0 parties en poids.

**8.** Matières à mouler selon la revendication 1, caractérisées en ce qu'elles contiennent des quantités efficaces d'au moins un additif choisi parmi les stabilisants, les pigments, les produits auxiliaires fluidifiants, les matières de charge et les matières renforçantes, les agents de démoulage et/ou les agents antistatiques.

**9.** Matières à mouler selon la revendication 8, caractérisées en ce qu'elles contiennent en tant que matières renforçantes, en proportions allant jusqu'à 100 % du poids de la matière à mouler à renforcer, des fibres de verre.

**10.** Procédé pour la préparation des matières à mouler selon la revendication 1, selon lequel on mélange de manière connue les composants A), B), D), E) et le cas échéant C) et le cas échéant les additifs selon revendication 8, puis on poursuit le mélange à l'état fondu ou bien on extrude à l'état fondu à des températures de 200 à 330° C dans des appareils usuels.

**Revendications pour l'Etat contractant suivant : ES**

**1.** Procédé pour la préparation de matières à mouler thermoplastiques consistant en

A) 60 à 96 parties en poids d'un ou plusieurs polycarbonates aromatiques thermoplastiques, exempt d'halogènes, de diphénols de formule II

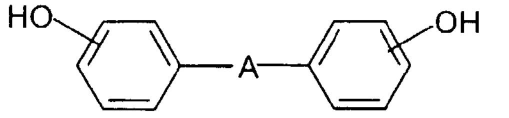

(II)

dans laquelle A représente une liaison simple, un groupe alkylène en $C_1$-$C_5$, alkylidène en $C_2$-$C_5$, cycloalkylidène en $C_5$-$C_6$, -S- ou -$SO_2$-,

B) 4 à 15 parties en poids d'un ou plusieurs polymères greffés, exempt d'halogènes de

B.1) 5 à 90 parties en poids, par rapport à B), d'un mélange de

B.1.1) 50 à 95 % en poids de styrène, d'α-méthylstyrène, d'un styrène substitué dans le noyau, de méthacrylate de méthyle ou leurs mélanges et

B. 1.2) 50 à 5 % en poids de (méth)acrylonitrile, de méthacrylate de méthyle d'acrylate de n-butyle, de (méth)acrylate de tert-butyle ou leurs mélanges sur

B.2) 95 à 10 parties en poids, par rapport à B), d'un caoutchouc diénique d'un caoutchouc d'éthylène, de propylène et d'un diène non conjugué ou d'un caoutchouc de silicone ayant une température de transition du second ordre $T_G \leq 10°C$, et

C) 0 à 40 parties en poids d'un copolymère thermoplastique, exempt d'halogène, de

C.1) 50 à 95 % en poids de styrène, d'$\alpha$-méthylstyrène, d'un styrène substitué dans le noyau, de méthacrylate de méthyle ou leurs mélanges,

C.2) 50 à 5 % en poids de (méth)acrylonitrile, de méthacrylate de méthyle ou leurs mélanges,

la somme des parties en poids de A)+ B) + le cas échéant C) étant dans tous les cas de 100 parties en poids, et

D) 1 à 20 parties en poids, pour 100 parties en poids de A) + B) + le cas échéant C) d'un dérivé du phosphore, exempt d'halogènes de formule I

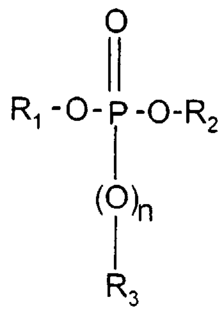

(I)

dans laquelle $R_1$, $R_2$ et $R_3$ représentent chacun, indépendamment les uns des autres, un groupe alkyle en $C_1$-$C_8$ ou un groupe aryle en $C_6$-$C_{20}$ portant éventuellement un sut tuant alkyle et n est égal à 0 ou 1, et

E) 0,05 à 5 parties en poids, pour 100 parties en poids de A)+ B) + le cas échéant C) d'un polymère du tétrafluoréthylène à une dimension de particule moyenne de 0,05 à 1 000 $\mu$m, une densité de 1,2 à 2,3 g/cm$^3$ et une teneur en fluor de 65 à 76 % en poids,

selon lequel on mélange les composants A), B), D), E) et le cas échéant C) puis on poursuit le mélange ou on extrude à l'état fondu à des températures allant de 200 à 330°C.

**2.** Procédé selon la revendication 1, selon lequel le composant C) est présent en quantités de 1 à 30 parties en poids.

**3.** Procédé selon la revendication 1, selon lequel le composant D) est présent en quantités de 2 à 15 parties en poids.

**4.** Procédé selon la revendication 1, selon lequel le composant E) est présent en quantités de 0,1 à 1 partie en poids.

**5.** Procédé selon la revendication 1, selon lequel le composant B.2) est un caoutchouc diénique.

**6.** Procédé selon revendication 5, selon lequel le caoutchouc du composant B.2) est un polybutadiène ou un copolymère butadiène/styrène.

**7.** Procédé selon la revendication 1, selon lequel le composant E) est mis en oeuvre à l'état de mélange coagulé d'une émulsion du polymère du tétrafluoréthylène E) à une dimension de particule moyenne de 0,05 à 20 $\mu$m et une densité de 1,2 à 1,9 g/cm$^3$ avec une émulsion du polymère greffé B), avec des proportions relatives en poids polymère greffé B)/polymère du tétrafluoréthylène E) qui vont de 95 : 5 à 60 : 40 et une teneur en compléments de B), pour 100 parties en poids de A) + B) + le cas échéant C), qui est de 0,1 à 4,0 parties en poids.

**8.** Procédé selon la revendication 1, selon lequel on ajoute les quantités efficaces d'au moins un additif choisi parmi les stabilisants, les pigments, les produits auxiliaires fluidifiants, les matières de charge, les matières renforçantes, les agents de moulage et/ou les agents antistatiques.

**9.** Procédé selon la revendication 8, caractérisé en ce que l'on ajoute en tant que matière renforçante, en proportions allant jusqu'à 60 % du poids de la matière à mouler à renforcer, des fibres de verre.